# EUROPEAN PATENT SPECIFICATION

(11) **EP 3 113 528 B1**
(45) Date of publication and mention of the grant of the patent: **02.01.2019**
(21) Application number: 14883598.6
(22) Date of filing: 24.06.2014
(51) Int. Cl.: H04W 12/06, H04W 76/10, H04W 84/12, H04L 29/06, H04W 48/20

(54) **WIFI HOTSPOT CONNECTION AND SELECTION METHOD, COMMUNICATIONS TERMINAL AND SYSTEM**
WIFI-HOTSPOTVERBINDUNGS- UND AUSWAHLVERFAHREN, KOMMUNIKATIONSENDGERÄT UND -SYSTEM
PROCÉDÉ DE CONNEXION ET DE SÉLECTION DE POINT D'ACCÈS SANS FIL, TERMINAL DE COMMUNICATION ET SYSTÈME

(30) Priority: 27.02.2014 CN 201410068004
(43) Date of publication of application: 04.01.2017
(73) Proprietor: ZTE Corporation, Shenzhen, Guangdong 518057 (CN)
(72) Inventor: ZHANG, Yuelong, Shenzhen Guangdong 518057 (CN)
(74) Representative: Schröer, Gernot H.
(86) International application number: PCT/CN2014/080565
(87) International publication number: WO 2015/127734

(56) References cited:
- WO-A1-2013/102694
- CN-A- 101 877 832
- CN-A- 103 024 929
- CN-A- 103 517 372
- CN-A- 103 533 610
- CN-A- 104 105 167
- US-A1- 2009 191 892
- US-A1- 2010 110 921
- US-A1- 2012 057 578
- US-A1- 2014 003 407
- US-B1- 8 479 263

## Description

### Technical Field

The present invention relates to a communication filed, and in particular to a method for connecting and selecting a WIFI hotspot, and a communication terminal and system.

### Background of the Related Art

With fast development of Internet and everyday change of communication technology, operators and various merchants start to provide WIFI hotspots without encryption at many different locations (such as airports and coffee shops) gradually so as to attract consumers and provide convenient Internet access for consumers.

However, WIFI devices without encryption provided by operators and merchants have fundamental differences on user experience because of different properties. The WIFI hotspot without encryption provided by an operator is one of Internet pay services and needs the second verification on an operator page after a connection is established, then Internet can be really accessed, while the WIFI hotspot provided by a merchant can be used directly to access Internet after a connection is established without a second verification. In many cases the strength of an operator is far stronger than that of a merchant, so that the signal quality of the operator WIFI hotspot without encryption is better than that of the merchant. Therefore, when selecting and connecting to a WIFI hotspot without encryption, a user has to verify manually whether a WIFI hotspot needs a second verification and selection even though a WIFI management software supports to join in a WIFI hotspot automatically. The process is so complex that the satisfaction of user experience will be reduced in a great degree.

The document US 2014/003407 A1 discloses a method and apparatus for connecting to an Access Point (AP) by which an electronic device can access the Internet. US 2012/057578 A1 is further prior art.

### Summary of the Invention

In order to solve the existing technical problems, the embodiments of the present invention provide a method for selecting and connecting a WIFI hotspot, a communication terminal and system.

The embodiments of the present invention provide a method according to claim 1, a communication system according to claim 10 and a computer storage medium according to claim 13. Further improvements and embodiments are provided in the dependent claims.

Also provided is a method for connecting a WIFI hotspot, which includes:
connecting, by a communication terminal, to a WIFI hotspot without encryption;
sending, by the communication terminal, preset verification information to a network server; and
receiving, by the communication terminal, verification information fed back by the network server and comparing with the locally-preset verification information, then keeping the connection with the WIFI hotspot when the verification information fed back from the network server is consistent with the locally-preset verification information.

In an embodiment of the present invention, when the communication terminal determines that the verification information fed back by the network server is not consistent with the locally-preset verification information, the method further comprises:
reselecting and connecting to a WIFI hotspot without encryption by the communication terminal; or
after deleting, by the communication terminal, the WIFI hotspot from a list of WIFI hotspots without encryption, then reselecting and connecting to a WIFI hotspot without encryption by the communication terminal; or
exiting, by the communication terminal, the connection with the WIFI directly.

In an embodiment of the present invention, before connecting, by the communication terminal, to a WIFI hotspot without encryption, the method further comprises:
deleting an operator WIFI hotspot from WIFI hotspots without encryption searched out by the communication terminal according to preset operator WIFI hotspot information.

In an embodiment of the present invention, before sending, by the communication terminal, preset verification information to a network server, the method further comprises:
encrypting, by the communication terminal, the verification information which is to be sent; and /or
before comparing, by the communication terminal, the received verification information with the locally-preset verification information, the method further comprises:
   decrypting the received verification information.

Also provided is a method for selecting a WIFI hotspot, which includes:
connecting, by a communication terminal, to a WIFI hotspot without encryption;
sending, by the communication terminal, preset verification information to a network server, and presetting verification information in the network server.
receiving, by the network server, verification information sent by the communication terminal and comparing with locally-preset verification information, then feeding back verification information to the communication terminal when the verification information sent by the communication terminal is consistent with the locally-preset verification information;
receiving, by the communication terminal, verification information fed back by the network server and comparing with locally-preset verification information, then keeping the connection with the WIFI hotspot when the verification information fed back by the network server is consistent with the locally-preset verification information.

In an embodiment of the present invention, when the network server determines that verification information sent by the communication terminal is not consistent with the locally-preset verification information, or the communication terminal determines that the verification information fed back the network server is not consistent with the locally-preset verification information, the method further comprises:
reselecting and connecting to a WIFI hotspot without encryption by the communication terminal; or
after deleting, by the communication terminal, the WIFI hotspot from a list of WIFI hotspots without encryption, then reselecting and connecting to a WIFI hotspot without encryption by the communication terminal; or
exiting, by the communication terminal, the connection with the WIFI directly.

In an embodiment of the present invention, before sending, by the communication terminal, preset verification information to a network server, the method further comprises:
encrypting, by the communication terminal, the verification information which is to be sent;
accordingly, before comparing, by the network server, the received verification information with the locally-preset verification information, the method further comprising:
   decrypting the received verification information.

In an embodiment of the present invention, before feeding back, by the network server, the verification information, the method further comprises:
encrypting, by the network server, the verification information which is to be sent;
accordingly, before comparing, by the communication terminal, the received verification information with the locally-preset verification information, the method further comprises:
   decrypting the received verification information.

In an embodiment of the present invention, the communication terminal encrypts the verification information which is to be sent into binary verification data information.

In an embodiment of the present invention, the network server encrypts the verification information which is to be sent into binary verification data information.

Also provided is a communication terminal which includes a WIFI communication module, a first sending module, a first receiving module and a first processing module; wherein,
the WIFI communication module is configured to connect to a WIFI hotspot without encryption;
the first sending module is configured to send verification information locally preset in the communication terminal to a network server;
the first receiving module is configured to receive verification information fed back by the network server;
the first processing module is configured to compare the verification information received by the first receiving module with the verification information locally preset in the communication terminal, and keep the connection between the WIFI communication module and the WIFI hotspot when the verification information received by the first receiving module is consistent with the verification information locally preset in the communication terminal.

In an embodiment of the present invention, the communication terminal further comprises a reselecting module, and the reselecting module is configured to, when the first processing module determines that the verification information received by the first receiving module is not consistent with the verification information locally preset in the communication terminal, reselect a WIFI hotspot without encryption to connect to the WIFI communication module; or delete the WIFI hotspot from a list of WIFI hotspots without encryption, then reselect a WIFI hotspot without encryption to connect to the WIFI communication module.

In an embodiment of the present invention, the communication terminal further comprises a screening module, and the screening module is configured to delete an operator WIFI hotspot from WIFI hotspots without encryption searched out by the WIFI communication terminal according to preset operator WIFI hotspot information before the WIFI communication module selects and connects to a WIFI hotspot without encryption.

In an embodiment of the present invention, wherein the communication terminal further comprises a first encrypting module and a first decrypting module, and the first encrypting module is configured to encrypt the verification information which is to be sent before the first sending module sends the verification information to the network server; and/or,
the first decrypting module is configured to decrypt the verification information received by the first receiving module before the first processing module compares the verification information received by the first receiving module with the verification information locally preset in the communication terminal.

Also provided is a communication system which includes a communication terminal and a network server;
the communication terminal comprises: a WIFI communication module, a first sending module, a first receiving module and a first processing module; and the network server comprises a second receiving module, a second sending module and a second processing module;
the WIFI communication module is configured to select and connect to a WIFI hotspot without encryption;
the first sending module is configured to send verification information locally preset in the communication terminal to the second receiving module;
the second receiving module is configured to receive the verification information sent by the first sending module;
the second processing module is configured to compare the verification information received by the second receiving module with verification information locally preset in the network server, and make verification information be sent by the second sending module to the first receiving module when the verification information received by the second receiving module is consistent with the verification information locally preset in the network server;
the first receiving module is configured to receive the verification information sent by the second sending module;
the first processing module is configured to compare the verification information received by the first receiving module with the verification information locally preset in the communication terminal, and keep the connection between the WIFI communication module and the WIFI hotspot when the verification information received by the first receiving module is consistent with the verification information locally preset in the communication terminal,.

In an embodiment of the present invention, the communication terminal further comprises: a first encrypting module and a first decrypting module, and the network server further comprises a second decrypting module and a second encrypting module, wherein,
the first encrypting module is configured to encrypt the verification information which is to be sent before the first sending module sends the verification information to the network server;
the first decrypting module is configured to decrypt verification information received by the first receiving module before the first processing module compares verification information received by the first receiving module with the verification information locally preset in the communication terminal;
the second decrypting module is configured to decrypt verification information received by the second receiving module before the second processing module compares verification information received by the second receiving module with the verification information locally preset in the network server;
the second encrypting module is configured to encrypt verification information which is to be sent before the second sending module sends the verification information to the communication terminal.

Also provided is a computer storage medium, the computer storage medium comprises a group of instructions, which, when executed, cause at least one processor to implement the method for a selecting WIFI hotspot.

A good effect of the embodiments of the present invention includes:
The embodiments of the present invention provide a method for selecting and connecting a WIFI hotspot, a communication terminal and system. A communication terminal selects and connects to a WIFI hotspot without encryption, then sends preset verification information to a network server. The network server is also preset with verification information. Then the network server receives verification information and compares with the locally-preset verification information, then feeds back verification information to the communication terminal when the received verification information is consistent with the locally-preset verification information. The communication terminal receives verification information fed back by the network server and compares with the locally-preset verification information, then keeps the connection with the WIFI hotspot when the verification information fed back by the network server is consistent with the locally-preset verification information which indicates that the currently connected WIFI hotspot is a hotspot which does not need a second verification. Therefore, with preset verification information, the communication terminal of the present invention realizes to screen automatically a WIFI hotspot which needs a second verification from WIFI hotspots without encryption, and the user does not need to verify and select by hand, which simplifies operation process of WIFI communication and improves the satisfaction of user experience in a large degree.

### Brief Description of Drawings

In accompanying drawings (they are not necessarily drawn to scale), the similar reference symbols in the drawings can describe the similar parts in the different views. The similar reference symbols having different letter suffixes can represent different instances of the similar parts. Various embodiments discussed herein are substantially illustrated in the drawings in the form of instances instead of the limitation.
Fig. 1 is a flow diagram of a method for selecting a WIFI hotspot according to a first embodiment of the present invention.
Fig. 2 is a structural diagram of a communication system according to a second embodiment of the present invention.
Fig. 3 is a first structural diagram of a communication terminal according to a second embodiment of the present invention.
Fig. 4 is a first structural diagram of a network server according to a second embodiment of the present invention.
Fig. 5 is a second structural diagram of a communication terminal according to a second embodiment of the present invention.
Fig. 6 is a third structural diagram of a communication terminal according to a second embodiment of the present invention.
Fig. 7 is a second structural diagram of a network server according to a second embodiment of the present invention.
Fig. 8 is a flow diagram of a method for selecting a WIFI hotspot in a first application scenario according to a third embodiment of the present invention.
Fig. 9 is a flow diagram of processing verification information by a network server according to an embodiment of the present invention in Fig. 8.
Fig. 10 is a flow diagram of a method for selecting a WIFI hotspot in a second application scenario according to a third embodiment of the present invention.
Fig. 11 is a flow diagram of a method for selecting a WIFI hotspot in a third application scenario according to a third embodiment of the present invention.

### Specified Embodiments

The present invention will be described in detail below in combination with the drawings through specified embodiments.

### The first embodiment:

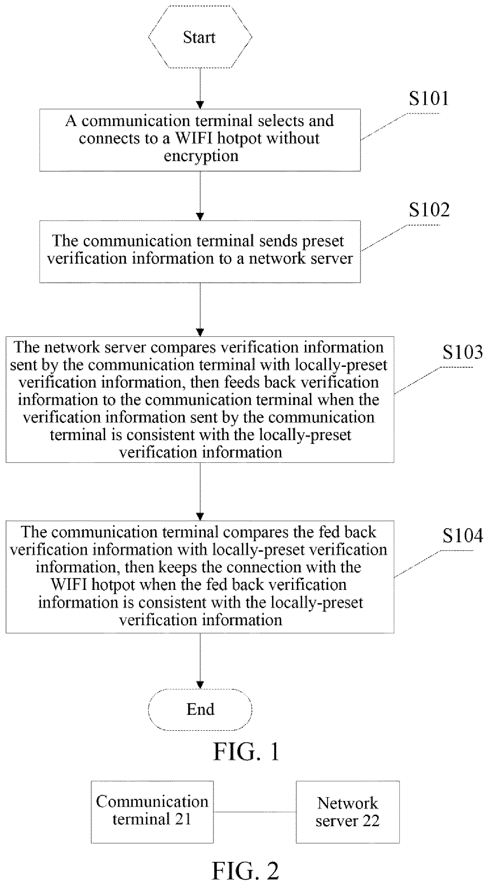

As shown in Fig. 1, a method for selecting a WIFI hotspot provided by the embodiment of the present invention includes the following steps:
In step 101, a communication terminal selects and connects to a WIFI hotspot without encryption.
In step 102, the communication terminal sends preset verification information to a network server, and the verification information is preset in the network server.
In step 103, the network server receives verification information sent by the communication terminal and compares with the locally-preset verification information, then feeds back verification information to the communication terminal when the verification information sent by the communication terminal is consistent with the locally-preset verification information.
In step 104, the communication terminal receives verification information fed back from the network server and compares with the locally-preset verification information, then keeps connection with the WIFI hotspot when the verification information fed back from the network server is consistent with the locally-preset verification information which indicates that the WIFI hotspot currently connected with the communication terminal does not need a second verification.

Therefore, by means of preset verification information, the communication terminal in the present embodiment realizes screening automatically a WIFI hotspot which needs a second verification from WIFI hotspots without encryption and does not need to verify and select by hand, which simplifies operation process of WIFI communication and improves the satisfaction of user experience in a large degree. At the same time, in a large degree, the communication terminal also avoids to connect wrongly to a WIFI hotspot without encryption which is provided by an operator and needs a second verification, which reduces users' economic expense and further improves users' satisfaction.

The communication terminal in the aforementioned step 101 may be any terminal equipment which has a communication function, such as mobile phone, IPAD and so on. The ways for selecting a WIFI hotspot may be any one of the following:
In way 1, the communication terminal searches for a WIFI hotspot without encryption and acquires a list of WIFI hotspots without encryption; then the communication terminal selects one from the WIFI hotspot list to connect with it; the communication terminal may select the WIFI hotspot with the best signal quality, or select the WIFI hotspot according to users' specified order, or even select randomly the WIFI hotspot from the list and so on.
In way 2, the communication terminal searches for a corresponding WIFI hotspot directly according to the WIFI hotspot information input by the user, and then connects with it.

In step 103, when the network server makes sure that the verification information sent by the communication terminal is not consistent with the locally-preset verification information, the network server may inform the communication terminal to reselect a WIFI hotspot without encryption to connect with it, and then it is to jump to step 102, until the communication terminal selects a WIFI hotspot without encryption which does not need a second verification or there is no WIFI hotspot without encryption left.

In step 104, when the communication terminal makes sure that the verification information sent by the network server is not consistent with the locally-preset verification information, the communication terminal reselects and connects to a WIFI hotspot without encryption and then it is to jump to step 102, until the communication terminal selects a WIFI hotspot without encryption which does not need a second verification or there is no WIFI hotspot without encryption left.

Certainly, in the aforementioned step 103 and step 104, when the comparison result of verification information is inconsistent, the communication terminal may reselect and connect to a WIFI hotspot without encryption from the list after deleting the currently verified WIFI hotspot from the list of WIFI hotspots without encryption. In some application scenarios, the communication terminal may exit the connection with the WIFI directly, for example, in a case that there is only one WIFI hotspot without encryption in the current WIFI hotspot list, or in other cases.

In order to improve success rate of subsequent verification in this embodiment, a step of deleting an operator WIFI hotspot may also be included before the aforementioned step 101. Specifically, according to preset operator WIFI hotspot information, an operator WIFI hotspot may be deleted from WIFI hotspots without encryption which are searched out by the communication terminal. More specifically, WIFI hotspot information (such as names and so on) provided by various operators may be firstly preset, the WIFI hotspot information may be preset locally in the communication terminal, and may also be preset in other equipments from which the communication terminal may acquire information, then after the communication terminal completes a searching for a WIFI hotspot without encryption and acquires a list of WIFI hotspots without encryption, the communication terminal deletes an operator WIFI hotspot from the list according to preset operator WIFI hotspot information.

In this embodiment, in order to ensure verification information is not tampered by a WIFI hotspot which needs a second verification during transmission, the verification information which is to be sent may be encrypted before sending the verification information to the opposite. Specifically, in the aforementioned step 102 the communication terminal will encrypt the verification information which is to be sent before sending the verification information to a network server; and/ or in the aforementioned step 103, the network server will encrypt the verification information which is to be sent before sending it to the communication terminal. Accordingly, before the communication terminal and/or network server compares received verification information with locally-preset verification information, a step of decrypting received verification information is also included. The specific encrypting / decrypting algorithm in this embodiment may be selected according to specific application scenarios and does not need to be repeated here. In order to further ensure security and reliability of encryption, a communication terminal and/ or network server will encrypt the verification information which is to be sent into binary verification data information in the embodiment.

It should be noted that verification information in this embodiment is any data information that has a function of distinguishing and discriminating in theory. A specific format and content of the verification information may be set according to specific application scenarios so that to ensure the security and reliability of the information.

### The second embodiment:

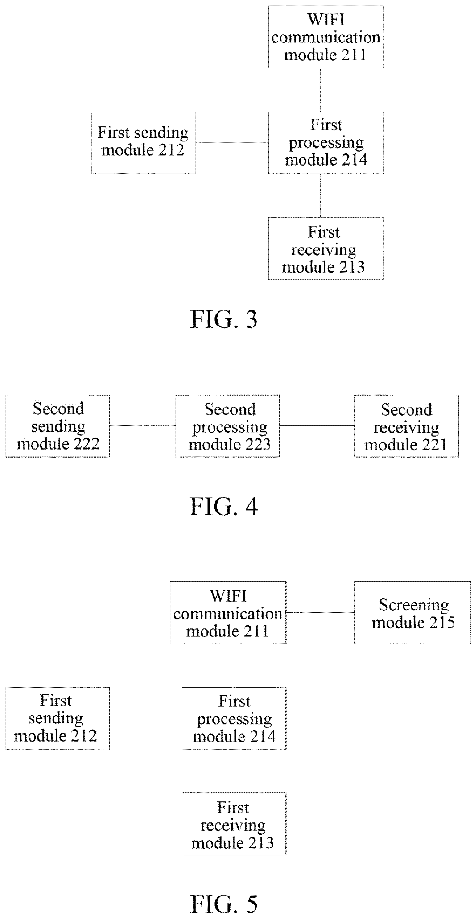

As shown in Fig. 2, the embodiment of the present invention provides a communication system which includes a communication terminal 21 and a network server 22; wherein as shown in Fig.3 and Fig.4, the communication terminal includes a WIFI communication module 211, a first sending module 212, a first receiving module 213 and a first processing module 214; the network server includes a second receiving module 221, a second sending module 222 and a second processing module 223;

The WIFI communication module 211 of the communication terminal is configured to select and connect to a WIFI hotspot without encryption; the way for selecting a WIFI hotspot may be any one of the following:
In way 1, the communication terminal searches for a WIFI hotspot without encryption and acquires a list of WIFI hotspots without encryption; then the communication terminal selects and connects to one WIFI hotspot in the WIFI hotspot list; when selecting a WIFI hotspot, the communication terminal may select the WIFI hotspot with the best signal quality, or select the WIFI hotspot according to users' specified order, or even select randomly the WIFI hotspot from the list and so on.
In way 2, the communication terminal searches for the WIFI hotspot directly according to the WIFI hotspot information input by the user, and then connects with it.

The first sending module 212 of the communication terminal is configured to send verification information locally preset in the communication terminal to the network server after connecting to a WIFI hotspot without encryption;
the second receiving module 221 of the network server is configured to receive the verification information sent by the first sending module 212;
the second processing module 223 of the network server is configured to compare the verification information received by the second receiving module 221 with the verification information locally preset in the network server, and send verification information to the communication terminal when the verification information received by the second receiving module 221 is consistent with the verification information locally preset in the network server;
the first receiving module 213 of the communication terminal is configured to receive verification information sent by the second sending module 223;
the first processing module 214 of the communication terminal is configured to compare the verification information received by the first receiving module 213 with the locally-preset verification information, and keep connection between the WIFI communication module 211 and the WIFI hotspot when the verification information received by the first receiving module 213 is consistent with the locally-preset verification information, which indicates that the currently connected WIFI hotspot without encryption does not need a second verification.

In this embodiment, the communication terminal further comprises a reselecting module, and the reselecting module is configured to reselect a WIFI hotspot without encryption to connect to the WIFI communication module 211 when the first processing module 214 determines that the verification information received by the first receiving module 213 is not consistent with the verification information locally preset in the communication terminal; or reselect a WIFI hotspot without encryption to connect to the WIFI communication module 211 after the currently connected WIFI hotspot is deleted from a list of WIFI hotspots without encryption. And the reselecting module is also configured to reselect a WIFI hotspot without encryption to connect to the WIFI communication module 211 when the second processing module 223 of the network server determines that the verification information received by the second receiving module 221 is not consistent with the verification information locally stored in the network server; or reselect a WIFI hotspot without encryption to connect to the WIFI communication module 211 after the currently connected WIFI hotspot is deleted from a list of WIFI hotspots without encryption.

As shown in Fig. 5, the communication terminal in this embodiment further comprises a screening module 215. The screening module 215 is configured to delete an operator WIFI hotspot before the WIFI communication module selects and connects to a WIFI hotspot without encryption so that to improve success rate of subsequent verification. Specifically, the screening module 215 deletes an operator WIFI hotspot from WIFI hotspots without encryption searched out by the communication terminal according to preset operator WIFI hotspot information. More specifically, WIFI hotspot information (such as names and so on) provided by various operators may be firstly preset, the WIFI hotspot information may be locally preset in the communication terminal or may also be preset in other equipments from which the communication terminal may acquire information, then after the communication terminal completes a searching for a WIFI hotspot without encryption and acquires a WIFI hotspot without encryption list, the communication terminal deletes an operator WIFI hotspot from the list according to preset operator WIFI hotspot information.

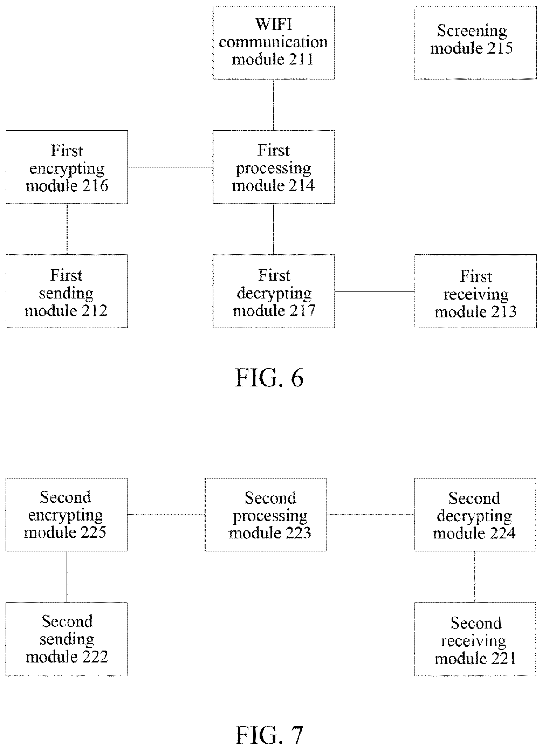

As shown in Fig.6, in order to ensure the security of the verification information in the transmission, the communication terminal of this embodiment further comprises a first encrypting module 216 and a first decrypting module 217. Wherein, the first encrypting module 216 is configured to encrypt verification information which is to be sent before the first sending module 212 of the communication terminal sends the verification information to the network server; the first decrypting module 217 is configured to decrypt verification information received by the first receiving module 211 before the first processing module 214 compares verification information received by the first receiving module 211 with the local verification preset in the communication terminal.

Accordingly, as shown in Fig. 7, the network server in the embodiment further comprises a second decrypting module 224 and a second encrypting module 225. The second decrypting module 224 is configured to decrypt verification information received by the second receiving module 221 before the second processing module 223 of the network server compares verification information received by the second receiving module 221 with the verification information locally preset in the network server; the second encrypting module 225 is configured to encrypt verification information which is to be sent before the second sending module 222 of the network server sends verification information to the communication terminal.

In order to further ensure security of verification information in the transmission, the first encrypting module 216 and the second encrypting module 224 in the embodiment may specifically encrypt the verification information which is to be sent into binary verification data information. The specific encrypting algorithm may be selected according to specific application scenarios.

In practice, the WIFI communication terminal 211 may be implemented by combination circuit of CPU (Central Processing Unit), DSP (Digital Signal Processor), or FPGA (Field-Programmable Gate Array) in a communication terminal; the first sending module 212 may be implement by a transmitter in the communication terminal; the first receiving module 213, the first encrypting module 216 and the first decrypting module 217 may be implemented by a receiver in the communication terminal; the first processing module 214, reselecting module, screening module 215 may be implemented by CPU, DSP or FPGA in the communication terminal; the reselecting module may be implemented by CPU, DSP or FPGA in the communication terminal; the second receiving module 221 may be implemented by a receiver in a network server; the second sending module 222 may be implemented by a transmitter in the network server; the second processing module 223, the second decrypting module 224 and the second encrypting module 225 may be implemented by CPU, DSP or FPGA in the network server.

### The third embodiment:

In order to understand the solution of the present invention better, the present invention will be further described below in combination with some specific application scenarios.

### Application scenario 1:

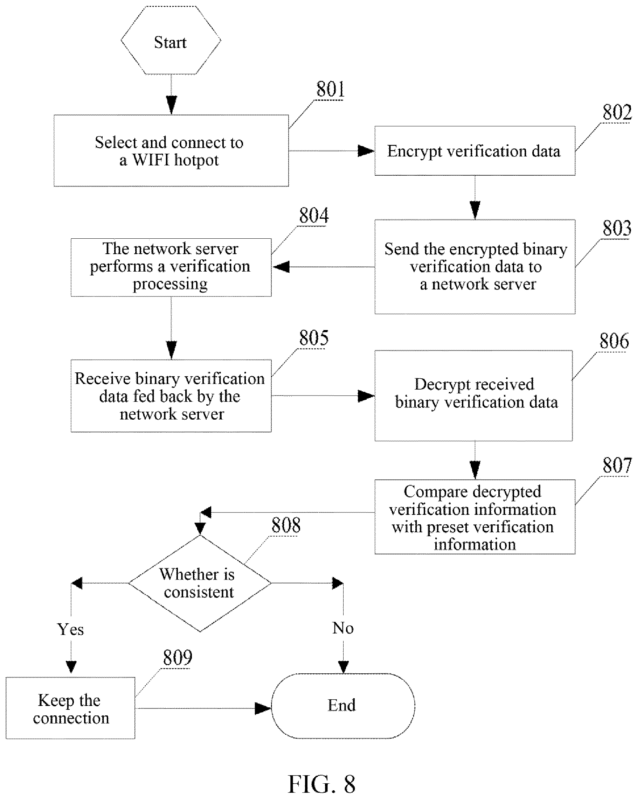

The verification procedure is just for a single WIFI hotspot without encryption, and the single WIFI hotspot without encryption may be designated by user or may be the only one WIFI hotspot without encryption that is searched currently, or the like. As shown in Fig. 8, the following steps are included:
In step 801, the communication terminal connects to the WIFI hotspot without encryption.
In step 802, the communication terminal encrypts verification information which is to sent, and encrypts the verification information into binary verification data information; and 1024-bit RSA encryption may be used in this step.
In step 803, the communication terminal sends the encrypted verification information to a corresponding network server.
In step 804, the network server verifies the received verification information, and feeds back encrypted verification information to the communication terminal after verifying that verification information received by the network server is consistent with the locally-preset verification information;
In step 805, the communication terminal receives verification information sent by network server;
In step 806, the communication terminal decrypts received verification information;
In step 807, the communication terminal compares decrypted verification information with locally-preset verification information;
In step 808, the communication terminal determines whether verification information decrypted by the communication terminal is consistent with locally-preset verification information; if so, it is to jump to step 809; if not, it is to end the process.
In step 809, the connection with the WIFI hotspot without encryption is kept.

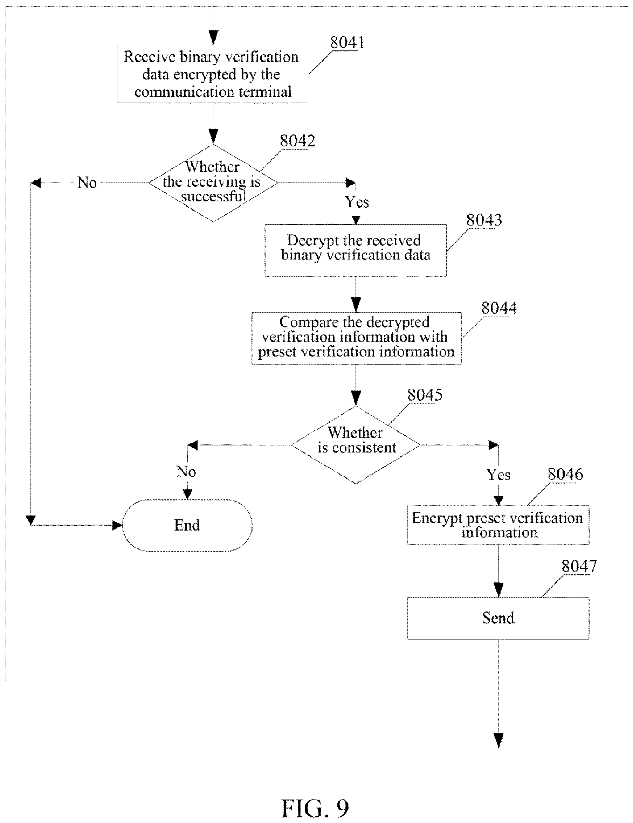

In step 804, the procedure of the network server verifying verification information received by the network server is shown in Fig. 9, which includes:
In step 8041, the network server receives binary verification data information sent by the communication terminal.
In step 8042, the network server determines whether the receiving is successful; if so, it is to jump to step 8043; if not, it is to end the process.
In step 8043, the network server decrypts the received binary verification data information.
In step 8044, the network server compares decrypted verification information with the locally-preset verification information.
In step 8045, the network server determines whether the decrypted verification information is consistent with the locally-preset verification information; if so, it is to jump to step 8046; if not, it is to end the process.
In step 8046, the network server encrypts the locally-preset verification information. The locally-preset verification information may be encrypted into binary verification data information by using 1024-bit RSA encryption algorithm;
In step 8047, the network server sends the encrypted verification information to the communication terminal.

### Application scenario 2:

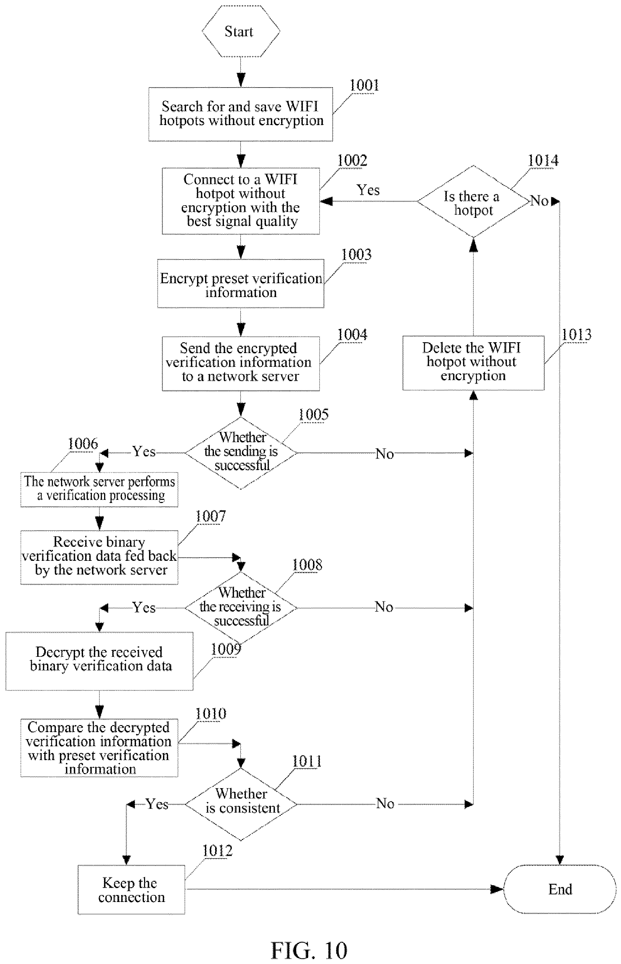

The application scenario 1 just takes a single WIFI hotspot as an example. However a communication terminal can usually search for more than one WIFI hotspots without encryption in many application scenarios. The procedure of verifying multiple WIFI hotspots without encryption searched-out by a communication terminal will be described. As shown in Fig. 10, the steps are included:
In step 1001, a communication terminal searches for and saves a WIFI hotspot without encryption, then obtains a list of WIFI hotspots without encryption.
In step 1002, the communication terminal selects and connects to a WIFI hotspot without encryption from the list of WIFI hotspots without encryption. Specifically, the WIFI hotspot with best signal quality may be selected; certainly, the WIFI hotspot may also be selected according to other rules set by users.
In step 1003, the communication terminal encrypts verification information which is to be sent, and encrypts the verification information into binary verification data information.
In step 1004, the communication terminal sends the encrypted verification information to a corresponding network server.
In step 1005, the communication terminal determines whether the verification information is sent successfully, if so, it is to jump to step 1006; if not, it is to jump to step 1013.
In step 1006, the network server verifies the received verification information and feeds back encrypted verification information to the communication terminal after verifying that the received verification information is consistent with the locally-preset verification information;
In step 1007, the communication terminal receives verification information sent by the network server;
In step 1008, the communication terminal determines whether the verification information is received successfully, if so, it is to jump to step 1009; if not, it is to jump to step 1013.
In step 1009, the communication terminal decrypts the received verification information;
In step 1010, the communication terminal compares the decrypted verification information with locally-preset verification information.
In step 1011, the communication terminal determines whether the decrypted verification information is consistent with the locally-preset verification information; if so, it is to jump to step 1012; if not, it is to jump to step 1013.
In step 1012, the connection with the WIFI hotspot without encryption is kept.
In step 1013, the currently connected WIFI hotspot is deleted;
In step 1014, it is to determine whether there is a remained WIFI hotspot in the list of WIFI hotspot without encryption, if so, it is to jump to step 1002; if not, it is to end the process.

The process of verifying verification information by the network server is similar to the process as shown in Fig. 9, so there is no necessary to repeat here.

### Application scenario 3:

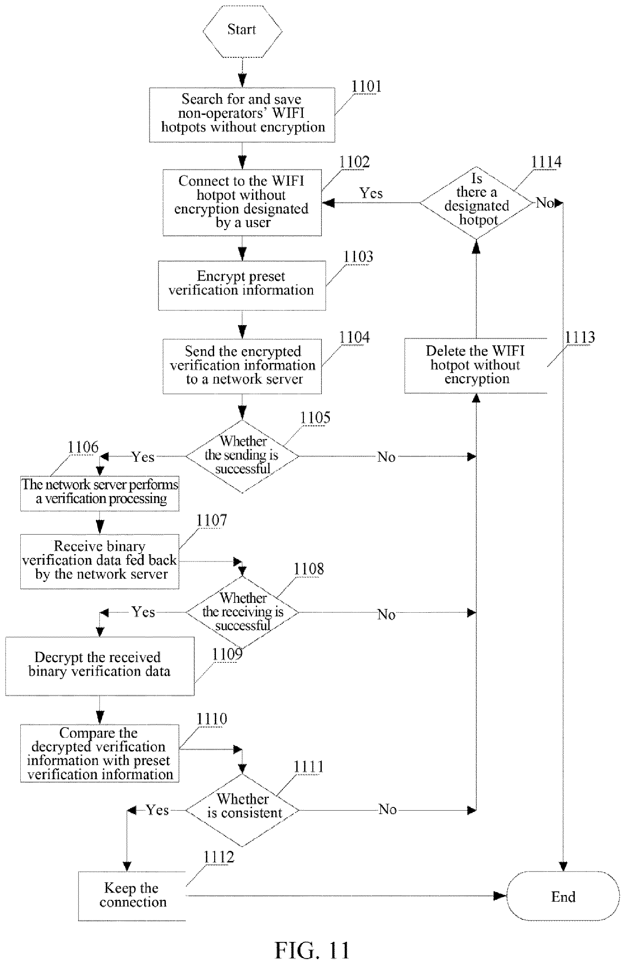

A communication terminal can search for more than one WIFI hotspots without encryption in many application scenarios. The more than one WIFI hotspots may include WIFI hotspots which need a second verification and are provided by operators, and also include WIFI hotspots which do not need a second verification and are provided by other merchants. Therefore firstly the WIFI hotspots without encryption provided by merchants may be deleted from the searched-out WIFI hotspots without encryption, then a process of connecting and verifying goes on, which can improve success rate of verification. And the communication terminal may connect to a WIFI hotspot designated by user when selecting a WIFI hotspot to connect. As shown in Fig.11, the steps are included:
In step 1101, the communication terminal searches for and just saves a non-operator WIFI hotspot without encryption, then obtains a list of WIFI hotspots without encryption;
In step 1102, the communication terminal connects to the first WIFI hotspot without encryption designated by user; certainly, the communication terminal may also select a WIFI hotspot without encryption according to other rules designated by user;
In step 1103, the communication terminal encrypts verification information which is to be sent, and encrypts the verification information into binary verification data information; specially, 128-bit AES algorithm may be used in this step, and other encryption algorithms can be used certainly.
In step 1104, the communication terminal sends the encrypted verification information to a corresponding network server.
In step 1105, the communication terminal determines whether the verification information is sent successfully, if so, it is to jump to step 1106; if not, it is to jump to step 1113.
In step 1106, the network server verifies the received verification information and feeds back encrypted verification information to the communication terminal when verifying that the received verification information is consistent with the locally-preset verification information.
In step 1107, the communication terminal receives verification information sent by the network server.
In step 1108, the communication terminal determines whether the verification information is received successfully, if so, it is to jump to step 1109; if not, it is to jump to step 1113.
In step 1109, the communication terminal decrypts the received verification information.
In step 1110, the communication terminal compares decrypted verification information with locally-preset verification information.
In step 1111, the communication terminal determines whether the decrypted verification information is consistent with locally-preset verification information; if so, it is to jump to step 1112; if not, it is to jump to step 1113;
In step 1112, the connection with the WIFI hotspot without encryption is kept.
In step 1113, the currently connected WIFI hotspot is deleted;
In step 1114, it is to determine whether there is any WIFI hotspot remained in the list of WIFI hotspot without encryption, if so, it is to jump to step 1102; if not, it is to end the process.

The process of verifying the received verification information by the network server in step 1106 is similar to the process as shown in Fig. 9, only 128-bit AES encryption algorithm may be used when the network server encrypts verification information.

Therefore according to the solution provided in embodiments of the present invention, by means of preset verification information, the communication terminal realizes to screen automatically a WIFI hotspot which needs a second verification from WIFI hotspots without encryption and does not need to verify and select by hand, which simplifies operation process of WIFI communication and improves the satisfaction of user experience in a large degree. At the same time, in a large degree, the communication terminal also avoids to connect wrongly to a WIFI hotspot without encryption which is provided by an operator and needs a second verification, which reduces users' economic expense and further improves users' satisfaction.

The person skilled in art should understand that embodiments of the present invention can provide a method, a system or computer program products. Therefore the embodiments of present invention can be hardware embodiments, software embodiments, or hardware-software combination embodiments. At the same time, the present invention can be implemented in a form of computer program product with one or more computer storage medium that contain computer available program codes.

The present invention is described with reference to flow or block diagram of a method, equipment (system) and computer program product according to the embodiments of the present invention. It should be understood that every flow and/ or block of a flow diagram and/ or block diagram and combination of flow and/or block of a flow diagram and/ or block diagram can be implemented by computer program instructions. The computer program instructions can be provided to a processor of a general-purpose computer, a special-purpose computer, an embedded processor or other programmable data processing devices to produce a machine. Thereby, the instructions executed by the processor of the computer or other programmable data processing devices generate an apparatus for implementing functions specified in one or more flows in the flowcharts and/or one or more blocks in the block diagrams.

The computer program instructions also can be stored in a computer readable memory which can make computer or other programmable data processing devices work in a specific way. Thereby, the instructions stored in computer readable memory generate an article of manufacture comprising instruction means for implementing functions specified in one flow or more flows of the flow charts and/or one block or more blocks of the block diagrams.

The computer program instructions also can be loaded onto a computer or other programmable data processing devices, in order to enable a series of operation steps to be performed on the computer or other programmable devices to generate a computer-implemented process. Thereby, the instructions executed on the computer or other programmable devices provide steps of implementing functions specified in one flow or more flows of the flow charts and/or one block or more blocks of the block diagrams.

The above is just a further detailed description of the present invention in combination with specific embodiments, rather than considering that specific embodiments of the present invention are limited to the above.

## Claims

1. A method for connecting a WIFI hotspot, **characterized by** comprising:
connecting, by a communication terminal, to a WIFI hotspot without encryption;
sending, by the communication terminal, verification information locally preset in the communication terminal to a network server; and
receiving, by the communication terminal, verification information fed back by the network server and comparing with the verification information locally preset in the communication terminal, then keeping the connection with the WIFI hotspot when the verification information fed back by the network server is consistent with the verification information locally preset in the communication terminal which indicates that the WIFI hotspot currently connected with the communication terminal does not need a second verification;
wherein, the network server is preset with verification information, the method further comprises:
receiving, by the network server, the verification information sent by the communication terminal and comparing with the verification information locally preset in the network server, then feeding back verification information to the communication terminal when the verification information sent by the communication terminal is consistent with the verification information locally preset in the network server.

2. The method for connecting a WIFI hotspot according to claim 1, wherein, when the communication terminal determines that the verification information fed back by the network server is not consistent with the verification information locally preset in the communication terminal, the method further comprises:
reselecting and connecting to a WIFI hotspot without encryption by the communication terminal; or
after deleting, by the communication terminal, the WIFI hotspot from a list of WIFI hotspots without encryption, then reselecting and connecting to a WIFI hotspot without encryption by the communication terminal; or
exiting, by the communication terminal, the connection with the WIFI directly.

3. The method for connecting a WIFI hotspot according to claim 1 or claim 2, wherein, before connecting, by the communication terminal, to a WIFI hotspot without encryption, the method further comprises:
deleting an operator WIFI hotspot from WIFI hotspots without encryption searched out by the communication terminal according to preset operator WIFI hotspot information.

4. The method for connecting a WIFI hotspot according to claim 1 or claim 2, wherein, before sending, by the communication terminal, verification information locally preset in the communication terminal to a network server, the method further comprises:
encrypting, by the communication terminal, the verification information which is to be sent; and /or
before comparing, by the communication terminal, the received verification information with the verification information locally preset in the communication terminal, the method further comprises:
decrypting the received verification information.

5. The method for connecting a WIFI hotspot according to claim 1, wherein, when the network server determines that the verification information sent by the communication terminal is not consistent with the verification information locally preset in the network server, or the communication terminal determines that the verification information fed back the network server is not consistent with the verification information locally preset in the communication terminal, the method further comprises:
reselecting and connecting to a WIFI hotspot without encryption by the communication terminal; or
after deleting, by the communication terminal, the WIFI hotspot from a list of WIFI hotspots without encryption, then reselecting and connecting to a WIFI hotspot without encryption by the communication terminal; or
exiting, by the communication terminal, the connection with the WIFI directly.

6. The method for connecting a WIFI hotspot according to claim 1 or 5, wherein, before sending, by the communication terminal, verification information locally preset in the communication terminal to a network server, the method further comprises:
encrypting, by the communication terminal, the verification information which is to be sent;
accordingly, before comparing, by the network server, the received verification information with the verification information locally preset in the network server, the method further comprises:
decrypting the received verification information.

7. The method for connecting a WIFI hotspot according to claim 1 or 5, wherein, before feeding back, by the network server, the verification information, the method further comprises:
encrypting, by the network server, the verification information which is to be sent;
accordingly, before comparing, by the communication terminal, the received verification information with the verification information locally preset in the communication terminal, the method further comprises:
decrypting the received verification information.

8. The method for connecting a WIFI hotspot according to claim 6, wherein the communication terminal encrypts the verification information which is to be sent into binary verification data information.

9. The method for connecting a WIFI hotspot according to claim 7, wherein the network server encrypts the verification information which is to be sent into binary verification data information.

10. A communication system, **characterized by** comprising: a communication terminal and a network server; wherein,
the communication terminal comprises: a WIFI communication module, a first sending module, a first receiving module and a first processing module; and the network server comprises a second receiving module, a second sending module and a second processing module;
the WIFI communication module is configured to select and connect to a WIFI hotspot without encryption;
the first sending module is configured to send verification information locally preset in the communication terminal to the second receiving module;
the second receiving module is configured to receive the verification information sent by the first sending module;
the second processing module is configured to compare the verification information received by the second receiving module with verification information locally preset in the network server, and make verification information be sent by the second sending module to the first receiving module when the verification information received by the second receiving module is consistent with the verification information locally preset in the network server;
the first receiving module is configured to receive the verification information sent by the second sending module;
the first processing module is configured to compare the verification information received by the first receiving module with the verification information locally preset in the communication terminal, and keep the connection between the WIFI communication module and the WIFI hotspot when the verification information received by the first receiving module is consistent with the verification information locally preset in the communication terminal which indicates that the currently connected WIFI hotspot without encryption does not need a second verification.

11. The communication system according to claim 10, wherein the communication terminal further comprises a reselecting module, and the reselecting module is configured to, when the first processing module determines that the verification information received by the first receiving module is not consistent with the verification information locally preset in the communication terminal, reselect a WIFI hotspot without encryption to connect to the WIFI communication module; or delete the WIFI hotspot from a list of WIFI hotspots without encryption, then reselect a WIFI hotspot without encryption to connect to the WIFI communication module,
and,
wherein the communication terminal further comprises a screening module, and the screening module is configured to delete an operator WIFI hotspot from WIFI hotspots without encryption searched out by the WIFI communication terminal according to preset operator WIFI hotspot information before the WIFI communication module selects and connects to a WIFI hotspot without encryption.

12. The communication system according to claim 10, wherein the communication terminal further comprises: a first encrypting module and a first decrypting module, and the network server further comprises a second decrypting module and a second encrypting module, wherein,
the first encrypting module is configured to encrypt the verification information which is to be sent before the first sending module sends the verification information to the network server;
the first decrypting module is configured to decrypt verification information received by the first receiving module before the first processing module compares verification information received by the first receiving module with the verification information locally preset in the communication terminal;
the second decrypting module is configured to decrypt verification information received by the second receiving module before the second processing module compares verification information received by the second receiving module with the verification information locally preset in the network server;
the second encrypting module is configured to encrypt verification information which is to be sent before the second sending module sends the verification information to the communication terminal.

13. A computer storage medium, **characterized by** comprising a group of instructions, which, when executed, cause at least one processor a communication terminal and at least one processor of a network server to implement the method for connecting a WIFI hotspot according to any one of claims 1 to 9.

## Patentansprüche

1. Verfahren zum Verbinden eines WIFI-Hotspots, **dadurch gekennzeichnet, dass** es umfasst:
Verbinden, durch ein Kommunikationsendgerät, eines WIFI-Hotspots ohne Verschlüsselung;
Senden, durch das Kommunikationsendgerät, von Verifizierungsinformationen, die lokal in dem Kommunikationsendgerät voreingestellt sind, an einen Netzwerkserver; und
Empfangen, durch das Kommunikationsendgerät, von Verifizierungsinformationen, die von dem Netzwerkserver rückgekoppelt wurden, und Vergleichen mit den Verifizierungsinformationen, die lokal in dem Kommunikationsendgerät voreingestellt sind, dann Halten der Verbindung mit dem WIFI-Hotspot, wenn die Verifizierungsinformationen, die von dem Netzwerkserver rückgekoppelt wurden, mit den Verifizierungsinformationen, die lokal in dem Kommunikationsendgerät voreingestellt sind, übereinstimmen, was anzeigt, dass der WIFI-Hotspot, der aktuell mit dem Kommunikationsendgerät verbunden ist, keine zweite Verifizierung benötigt;
wobei, der Netzwerkserver ist mit Verifizierungsinformationen voreingestellt, das Verfahren ferner umfasst:
Empfangen, durch den Netzwerkserver, der Verifizierungsinformationen, die von dem Kommunikationsendgerät gesendet wurden, und Vergleichen mit den Verifizierungsinformationen, die lokal in dem Netzwerkserver voreingestellt sind, dann Rückkoppeln der Verifizierungsinformationen an das Kommunikationsendgerät, wenn die Verifizierungsinformationen, die von dem Kommunikationsendgerät gesendet wurden, mit den Verifizierungsinformationen, die lokal in dem Netzwerkserver voreingestellt sind, übereinstimmen.

2. Verfahren zum Verbinden eines WIFI-Hotspots nach Anspruch 1, wobei, wenn das Kommunikationsendgerät bestimmt, dass die Verifizierungsinformationen, die von dem Netzwerkserver rückgekoppelt wurden, nicht mit den Verifizierungsinformationen, die lokal in dem Kommunikationsendgerät voreingestellt sind, übereinstimmen, das Verfahren ferner umfasst:
Neuauswählen und Verbinden eines WIFI-Hotspots ohne Verschlüsselung durch das Kommunikationsendgerät; oder
nach dem Löschen, durch das Kommunikationsendgerät, des WIFI-Hotspots aus einer Liste von WIFI-Hotspots ohne Verschlüsselung, dann Neuauswählen und Verbinden eines WIFI-Hotspots ohne Verschlüsselung durch das Kommunikationsendgerät; oder
direktes Beenden, durch das Kommunikationsendgerät, der Verbindung mit dem WIFI.

3. Verfahren zum Verbinden eines WIFI-Hotspots nach Anspruch 1 oder Anspruch 2, wobei, vor dem Verbinden, durch das Kommunikationsendgerät, eines WIFI-Hotspots ohne Verschlüsselung, das Verfahren ferner umfasst:
Löschen eines Betreiber-WIFI-Hotspots aus den WIFI-Hotspots ohne Verschlüsselung, die von dem Kommunikationsendgerät ausgesucht wurden, gemäß den voreingestellten Betreiber-WIFI-Hotspot-Informationen.

4. Verfahren zum Verbinden eines WIFI-Hotspots nach Anspruch 1 oder Anspruch 2, wobei, vor dem Senden, durch das Kommunikationsendgerät, von Verifizierungsinformationen, die lokal in dem Kommunikationsgerät voreingestellt sind, an einen Netzwerkserver, das Verfahren ferner umfasst:
Verschlüsseln, durch das Kommunikationsendgerät, der zu sendenden Verifizierungsinformationen; und/oder
vor dem Vergleichen, durch das Kommunikationsendgerät, der empfangenen Verifizierungsinformationen mit den Verifizierungsinformationen, die lokal in dem Kommunikationsendgerät voreingestellt sind, das Verfahren ferner umfasst:
Entschlüsseln der empfangenen Verifizierungsinformationen.

5. Verfahren zum Verbinden eines WIFI-Hotspots nach Anspruch 1, wobei, wenn der Netzwerkserver bestimmt, dass die Verifizierungsinformationen, die von dem Kommunikationsendgerät gesendet wurden, nicht mit den Verifizierungsinformationen, die lokal in dem Netzwerkserver voreingestellt sind, übereinstimmen, oder das Kommunikationsendgerät bestimmt, dass die Verifizierungsinformationen, die von dem Netzwerkserver rückgekoppelt wurden, nicht mit den Verifizierungsinformationen, die lokal in dem Kommunikationsendgerät voreingestellt sind, übereinstimmen, das Verfahren ferner umfasst:
Neuauswählen und Verbinden eines WIFI-Hotspots ohne Verschlüsselung durch das Kommunikationsendgerät; oder
nach dem Löschen, durch das Kommunikationsendgerät, des WIFI-Hotspots aus einer Liste von WIFI-Hotspots ohne Verschlüsselung, dann Neuauswählen und Verbinden eines WIFI-Hotspots ohne Verschlüsselung durch das Kommunikationsendgerät; oder
direktes Beenden, durch das Kommunikationsendgerät, der Verbindung mit dem WIFI.

6. Verfahren zum Verbinden eines WIFI-Hotspots nach Anspruch 1 oder 5, wobei, vor dem Senden, durch das Kommunikationsendgerät, von Verifizierungsinformationen, die lokal in dem Kommunikationsgerät voreingestellt sind, an einen Netzwerkserver, das Verfahren ferner umfasst:
Verschlüsseln, durch das Kommunikationsendgerät, der zu sendenden Verifizierungsinformationen;
dementsprechend, vor dem Vergleichen, durch das Kommunikationsendgerät, der Verifizierungsinformationen, die lokal in dem Kommunikationsendgerät voreingestellt sind, das Verfahren ferner umfasst:
Entschlüsseln der empfangenen Verifizierungsinformationen.

7. Verfahren zum Verbinden eines WIFI-Hotspots nach Anspruch 1 oder 5, wobei, vor dem Rückkoppeln, durch den Netzwerkserver, der Verifizierungsinformationen, das Verfahren ferner umfasst:
Verschlüsseln, durch den Netzwerkserver, der zu sendenden Verifizierungsinformationen;
dementsprechend, vor dem Vergleichen, durch das Kommunikationsendgerät, der empfangenen Verifizierungsinformationen mit den Verifizierungsinformationen, die lokal in dem Kommunikationsendgerät voreingestellt sind, das Verfahren ferner umfasst:
Entschlüsseln der empfangenen Verifizierungsinformationen.

8. Verfahren zum Verbinden eines WIFI-Hotspots nach Anspruch 6, wobei das Kommunikationsendgerät die zu sendenden Verifizierungsinformationen in Binärverifizierungsdateninformationen verschlüsselt.

9. Verfahren zum Verbinden eines WIFI-Hotspots nach Anspruch 7, wobei der Netzwerkserver die zu sendenden Verifizierungsinformationen in Binärverifizierungsdateninformationen verschlüsselt.

10. Kommunikationssystem, das **dadurch gekennzeichnet ist, dass** es umfasst: ein Kommunikationsendgerät und einen Netzwerkserver; wobei
das Kommunikationsendgerät umfasst: ein WIFI-Kommunikationsmodul, ein erstes Sendemodul, ein erstes Empfangsmodul und ein erstes Verarbeitungsmodul; und der Netzwerkserver ein zweites Empfangsmodul, ein zweites Sendemodul und ein zweites Verarbeitungsmodul umfasst;
das WIFI-Kommunikationsmodul dazu ausgelegt ist, einen WIFI-Hotspot ohne Verschlüsselung auszuwählen und zu verbinden;
das erste Sendemodul dazu ausgelegt ist, Verifizierungsinformationen, die lokal in dem Kommunikationsendgerät voreingestellt sind, an das zweite Empfangsmodul zu senden;
das zweite Empfangsmodul dazu ausgelegt ist, die von dem ersten Sendemodul gesendeten Verifizierungsinformationen zu empfangen;
das zweite Verarbeitungsmodul dazu ausgelegt ist, die von dem zweiten Empfangsmodul empfangenen Verifizierungsinformationen mit Verifizierungsinformationen, die lokal in dem Netzwerkserver voreingestellt sind, zu vergleichen, und dafür zu sorgen, dass Verifizierungsinformationen von dem zweiten Sendemodul an das erste Empfangsmodul gesendet werden, wenn die von dem zweiten Empfangsmodul empfangenen Verifizierungsinformationen mit den Verifizierungsinformationen, die lokal in dem Netzwerkserver voreingestellt sind, übereinstimmen;
das erste Empfangsmodul dazu ausgelegt ist, die von dem zweiten Sendemodul gesendeten Verifizierungsinformationen zu empfangen;
das erste Verarbeitungsmodul dazu ausgelegt ist, die von dem ersten Empfangsmodul empfangenen Verifizierungsinformationen mit den Verifizierungsinformationen, die lokal in dem Kommunikationsendgerät voreingestellt sind, zu vergleichen, und die Verbindung zwischen dem WIFI-Kommunikationsmodul und dem WIFI-Hotspot zu halten, wenn die von dem ersten Empfangsmodul empfangenen Verifizierungsinformationen mit den Verifizierungsinformationen, die lokal in dem Kommunikationsendgerät voreingestellt sind, übereinstimmen, was anzeigt, dass der aktuell verbundene WIFI-Hotspot ohne Verschlüsselung keine zweite Verifizierung benötigt.

11. Kommunikationssystem nach Anspruch 10, wobei das Kommunikationsendgerät ferner ein Neuauswahlmodul umfasst, und das Neuauswahlmodul dazu ausgelegt ist, wenn das erste Verarbeitungsmodul bestimmt, dass die von dem ersten Empfangsmodul empfangenen Verifizierungsinformationen nicht mit den Verifizierungsinformationen, die lokal in dem Kommunikationsendgerät voreingestellt sind, übereinstimmen, einen WIFI-Hotspot ohne Verschlüsselung neu auszuwählen, um das WIFI-Kommunikationsmodul zu verbinden; oder den WIFI-Hotspot aus einer Liste von WIFI-Hotspots ohne Verschlüsselung zu löschen, dann einen WIFI-Hotspot ohne Verschlüsselung neu auszuwählen, um das WIFI-Kommunikationsmodul zu verbinden,
und
wobei das Kommunikationsendgerät ferner ein Prüfmodul umfasst, und das Prüfmodul dazu ausgelegt ist, einen Betreiber-WIFI-Hotspot aus den WIFI-Hotspots ohne Verschlüsselung, die von dem WIFI-Kommunikationsendgerät gemäß den voreingestellten Betreiber-WIFI-Hotspot-Informationen ausgesucht wurden, zu löschen, bevor das WIFI-Kommunikationsmodul einen WIFI-Hotspot ohne Verschlüsselung auswählt und verbindet.

12. Kommunikationssystem nach Anspruch 10, wobei das Kommunikationsendgerät ferner umfasst: ein erstes Verschlüsselungsmodul und ein erstes Entschlüsselungsmodul, und der Netzwerkserver ferner ein zweites Entschlüsselungsmodul und ein zweites Verschlüsselungsmodul umfasst, wobei das erste Verschlüsselungsmodul dazu ausgelegt ist, die zu sendenden Verifizierungsinformationen zu verschlüsseln, bevor das erste Sendemodul die Verifizierungsinformationen an den Netzwerkserver sendet;
das erste Entschlüsselungsmodul dazu ausgelegt ist, die von dem ersten Empfangsmodul empfangenen Verifizierungsinformationen zu entschlüsseln, bevor das erste Verarbeitungsmodul die von dem ersten Empfangsmodul empfangenen Verifizierungsinformationen mit den lokal in dem Kommunikationsendgerät voreingestellten Verifizierungsinformationen vergleicht; von dem zweiten Empfangsmodul empfangene Verifizierungsinformationen mit den lokal in dem Netzwerkserver voreingestellten Verifizierungsinformationen zu vergleichen;
das zweite Verschlüsselungsmodul dazu ausgelegt ist, die zu sendenden Verifizierungsinformationen zu verschlüsseln, bevor das zweite Sendemodul die Verifizierungsinformationen an das Kommunikationsendgerät sendet.

13. Computerspeichermedium, das **dadurch gekennzeichnet ist, dass** es eine Gruppe Anweisungen umfasst, die, wenn ausgeführt, bewirken, dass mindestens ein Prozessor eines Kommunikationsendgeräts und mindestens ein Prozessor eines Netzwerkservers das Verfahren zum Verbinden eines WIFI-Hotspots nach einem der Ansprüche 1 bis 9 implementieren.

## Revendications

1. Procédé pour se connecter à un point d'accès sans fil WIFI, **caractérisé en ce qu'**il comprend:
se connecter, au moyen d'un terminal de communication, à un point d'accès sans fil WIFI sans chiffrement;
envoyer, par le terminal de communication, des informations de vérification prédéfinies localement dans le terminal de communication à un serveur de réseau; et
recevoir, par le terminal de communication, des informations de vérification renvoyées par le serveur de réseau et les comparer aux informations de vérification prédéfinies localement dans le terminal de communication, puis conserver la connexion avec le point d'accès sans fil WIFI lorsque les informations de vérification renvoyées par le serveur de réseau sont cohérentes avec les informations de vérification prédéfinies localement dans le terminal de communication qui indique que le point d'accès sans fil WIFI actuellement connecté au terminal de communication n'a pas besoin d'une seconde vérification;
le serveur de réseau étant prédéfini avec des informations de vérification, le procédé comprenant en outre:
recevoir, par le serveur de réseau, les informations de vérification envoyées par le terminal de communication et les comparer aux informations de vérification prédéfinies localement dans le serveur de réseau, puis renvoyer des informations de vérification au terminal de communication lorsque les informations de vérification envoyées par le terminal de communication sont cohérentes avec les informations de vérification prédéfinies localement dans le serveur de réseau.

2. Procédé pour se connecter à un point d'accès sans fil WIFI selon la revendication 1, dans lequel, lorsque le terminal de communication détermine que les informations de vérification renvoyées par le serveur de réseau ne sont pas cohérentes avec les informations de vérification prédéfinies localement dans le terminal de communication, le procédé comprend en outre:
re-sélectionner et se connecter à un point d'accès sans fil WIFI sans chiffrement par le terminal de communication; ou
après la suppression, par le terminal de communication, du point d'accès sans fil WIFI à partir d'une liste de points d'accès sans fil WIFI sans chiffrement, re-sélectionner et se connecter à un point d'accès sans fil WIFI sans chiffrement par le terminal de communication; ou
quitter, par le terminal de communication, la connexion avec le WIFI directement.

3. Procédé pour se connecter à un point d'accès sans fil WIFI selon la revendication 1 ou la revendication 2, dans lequel, avant la connexion, par le terminal de communication, à un point d'accès sans fil WIFI sans chiffrement, le procédé comprend en outre:
supprimer un point d'accès sans fil WIFI d'opérateur à partir de points d'accès sans fil WIFI sans chiffrement recherchés par le terminal de communication selon des informations de point d'accès sans fil WIFI d'opérateur prédéfinies.

4. Procédé pour se connecter à un point d'accès sans fil WIFI selon la revendication 1 ou la revendication 2, dans lequel, avant l'envoi, par le terminal de communication, d'informations de vérification prédéfinies localement dans le terminal de communication à un serveur de réseau, le procédé comprend en outre:
chiffrer, par le terminal de communication, les informations de vérification qui doivent être envoyées; et/ou
avant la comparaison, par le terminal de communication, des informations de vérification reçues aux informations de vérification prédéfinies localement dans le terminal de communication, le procédé comprend en outre:
déchiffrer les informations de vérification reçues.

5. Procédé pour se connecter à un point d'accès sans fil WIFI selon la revendication 1, dans lequel, lorsque le serveur de réseau détermine que les informations de vérification envoyées par le terminal de communication ne sont pas cohérentes avec les informations de vérification prédéfinies localement dans le serveur de réseau, ou lorsque le terminal de communication détermine que les informations de vérification renvoyées par le serveur de réseau ne sont pas cohérentes avec les informations de vérification prédéfinies localement dans le terminal de communication, le procédé comprend en outre:
re-sélectionner et se connecter à un point d'accès sans fil WIFI sans chiffrement par le terminal de communication; ou
après la suppression, par le terminal de communication, du point d'accès sans fil WIFI à partir d'une liste de points d'accès sans fil WIFI sans chiffrement, alors re-sélectionner et se connecter à un point d'accès sans fil WIFI sans chiffrement par le terminal de communication; ou
quitter, par le terminal de communication, la connexion avec le WIFI directement.

6. Procédé pour se connecter à un point d'accès sans fil WIFI selon la revendication 1 ou 5, dans lequel, avant l'envoi, par le terminal de communication, d'informations de vérification prédéfinies localement dans le terminal de communication à un serveur de réseau, le procédé comprend en outre:
chiffrer, par le terminal de communication, les informations de vérification qui doivent être envoyées;
en conséquence, avant la comparaison, par le serveur de réseau, des informations de vérification reçues aux informations de vérification prédéfinies localement dans le serveur de réseau, le procédé comprend en outre:
déchiffrer les informations de vérification reçues.

7. Procédé pour se connecter à un point d'accès sans fil WIFI selon la revendication 1 ou 5, dans lequel, avant le renvoi, par le serveur de réseau, des informations de vérification, le procédé comprend en outre:
chiffrer, par le serveur de réseau, les informations de vérification qui doivent être envoyées;
en conséquence, avant la comparaison, par le terminal de communication, des informations de vérification reçues aux informations de vérification prédéfinies localement dans le terminal de communication, le procédé comprend en outre:
déchiffrer les informations de vérification reçues.

8. Procédé pour se connecter à un point d'accès sans fil WIFI selon la revendication 6, dans lequel le terminal de communication chiffre les informations de vérification qui doivent être envoyées en informations de données de vérification binaires.

9. Procédé pour se connecter à un point d'accès sans fil WIFI selon la revendication 7, dans lequel le serveur de réseau chiffre les informations de vérification qui doivent être envoyées en informations de données de vérification binaires.

10. Système de communication, **caractérisé en ce qu'**il comprend: un terminal de communication et un serveur de réseau; dans lequel,
le terminal de communication comprend: un module de communication WIFI, un premier module d'envoi, un premier module de réception et un premier module de traitement; et le serveur de réseau comprend un second module de réception, un second module d'envoi et un second module de traitement;
le module de communication WIFI est configuré pour sélectionner et se connecter à un point d'accès sans fil WIFI sans chiffrement;
le premier module d'envoi est configuré pour envoyer des informations de vérification prédéfinies localement dans le terminal de communication au second module de réception;
le second module de réception est configuré pour recevoir les informations de vérification envoyées par le premier module d'envoi;
le second module de traitement est configuré pour comparer les informations de vérification reçues par le second module de réception à des informations de vérification prédéfinies localement dans le serveur de réseau, et amener des informations de vérification à être envoyées par le second module d'envoi au premier module de réception lorsque les informations de vérification reçues par le second module de réception sont cohérentes avec les informations de vérification prédéfinies localement dans le serveur de réseau;
le premier module de réception est configuré pour recevoir les informations de vérification envoyées par le second module d'envoi;
le premier module de traitement est configuré pour comparer les informations de vérification reçues par le premier module de réception aux informations de vérification prédéfinies localement dans le terminal de communication, et conserver la connexion entre le module de communication WIFI et le point d'accès sans fil WIFI lorsque les informations de vérification reçues par le premier module de réception sont cohérentes avec les informations de vérification prédéfinies localement dans le terminai de communication qui indique que le point d'accès sans fil WIFI connecté actuellement sans chiffrement n'a pas besoin d'une seconde vérification.

11. Système de communication selon la revendication 10, dans lequel le terminai de communication comprend en outre un module de re-sélection, et le module de re-sélection est configuré pour, lorsque le premier module de traitement détermine que les informations de vérification reçues par le premier module de réception ne sont pas cohérentes avec les informations de vérification prédéfinies localement dans le terminal de communication, re-sélectionner un point d'accès sans fil WIFI sans chiffrement pour se connecter au module de communication WIFI; ou supprimer le point d'accès sans fil WIFI à partir d'une liste de points d'accès sans fil WIFI sans chiffrement, puis re-sélectionner un point d'accès sans fil WIFI sans chiffrement pour se connecter au module de communication WIFI,
et,
le terminal de communication comprenant en outre un module de tri, et le module de tri étant configuré pour supprimer un point d'accès sans fil WIFI d'opérateur à partir de points d'accès sans fil WIFI sans chiffrement recherchés par le terminal de communication WIFI selon des informations de point d'accès sans fil WIFI d'opérateur prédéfinies avant que le module de communication WIFI ne sélectionne et ne se connecte à un point d'accès sans fil WIFI sans chiffrement.

12. Système de communication selon la revendication 10, dans lequel le terminai de communication comprend en outre: un premier module de chiffrement et un premier module de déchiffrement, et le serveur de réseau comprend en outre un second module de déchiffrement et un second module de chiffrement,
le premier module de chiffrement étant configuré pour chiffrer les informations de vérification qui doivent être envoyées avant que le premier module d'envoi n'envoie les informations de vérification au serveur de réseau;
le premier module de déchiffrement étant configuré pour déchiffrer des informations de vérification reçues par le premier module de réception avant que le premier module de traitement ne compare des informations de vérification reçues par le premier module de réception aux informations de vérification prédéfinies localement dans le terminal de communication;
le second module de déchiffrement étant configuré pour déchiffrer des informations de vérification reçues par le second module de réception avant que le second module de traitement ne compare des informations de vérification reçues par le second module de réception aux informations de vérification prédéfinies localement dans le serveur de réseau; le second module de chiffrement étant configuré pour chiffrer des informations de vérification qui doivent être envoyées avant que le second module d'envoi n'envoie les informations de vérification au terminal de communication.

13. Support de stockage informatique, **caractérisé en ce qu'**il comprend un groupe d'instructions, qui, lorsqu'elles sont exécutées, amènent au moins un processeur d'un terminal de communication et au moins un processeur d'un serveur de réseau à mettre en oeuvre le procédé pour se connecter à un point d'accès sans fil WIFI selon l'une quelconque des revendications 1 à 9.
